(19) Europäisches Patentamt / European Patent Office / Office européen des brevets

(11) **EP 2 947 436 B1**

(12) **EUROPÄISCHE PATENTSCHRIFT**

(45) Veröffentlichungstag und Bekanntmachung des Hinweises auf die Patenterteilung:
**21.12.2016 Patentblatt 2016/51**

(51) Int Cl.:
*G01K 1/14* (2006.01)     *G01K 7/42* (2006.01)

(21) Anmeldenummer: **15168067.5**

(22) Anmeldetag: **19.05.2015**

(54) **VERFAHREN ZUR BESTIMMUNG DER OBERFLÄCHENTEMPERATUR EINES GARGUTS**

METHOD FOR DETERMINING THE SURFACE TEMPERATURE OF AN ITEM TO BE COOKED

PROCÉDÉ DE DÉTERMINATION DE LA TEMPÉRATURE EN SURFACE D'UN PRODUIT DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2014 DE 102014107052**

(43) Veröffentlichungstag der Anmeldung:
**25.11.2015 Patentblatt 2015/48**

(73) Patentinhaber: **Rational Aktiengesellschaft 86899 Landsberg am Lech (DE)**

(72) Erfinder:
• **Schreiner, Thomas Dr.**
  **86916 Kaufering (DE)**
• **Weiß, Manuela**
  **86511 Unterbergen (DE)**
• **Heim, Martin**
  **86916 Kaufering (DE)**

(74) Vertreter: **Prinz & Partner mbB Patent- und Rechtsanwälte Rundfunkplatz 2 80335 München (DE)**

(56) Entgegenhaltungen:
**WO-A2-2008/093282     DE-A1-102004 044 100
DE-A1-102012 210 749**

EP 2 947 436 B1

**Beschreibung**

Die Erfindung betrifft ein Verfahren zur Bestimmung der Oberflächentemperatur eines Garguts, das in einem Gargerät in einer Garraumatmosphäre gegart wird, die Wasserdampf enthält.

Zur Steuerung und Kontrolle von Garprozessen in einem Gargerät ist es notwendig, die Oberflächentemperatur des zu garenden Garguts zu kennen, um das Gargut optimal Garen zu können.

Üblicherweise werden zur Bestimmung der Oberflächentemperatur des Garguts direkte Messmethoden angewandt, die die Oberflächentemperatur des Garguts direkt bestimmen, wie ein Kontaktthermometer oder ein Infrarotthermometer. Hierzu ist es jedoch notwendig, das Gargerät mit den entsprechenden Sensoren auszustatten, was zu erhöhten Produktionskosten und einer vergrößerten Komplexität des Gargeräts selbst führt.

Die WO 2008/093282 A2 zeigt ein Verfahren zur Ermittlung der Oberflächentemperatur eines zu kühlenden Gutes, das in einer Kühlbox transportiert wird. Die Kühlbox hat eine Kühlvorrichtung zur Kühlung des Innenraums der Kühlbox, einen Temperatursensor, um die Raumtemperatur innerhalb der Kühlbox zu bestimmen, und eine Steuereinheit, die Messwerte des Temperatursensors und Benutzereingaben entgegennimmt. Zur Bestimmung der Oberflächentemperatur muss der Benutzer zunächst die Temperatur des Gutes bei Beginn des Transportes in die Kühlbox, d.h. die Steuerungseinheit eingeben. Mithilfe dieser Ausgangstemperatur und den in regelmäßigen Abständen gemessenen Werten der Raumtemperatur bestimmt die Steuereinheit unter Berücksichtigung des thermischen Widerstandes und der Wärmekapazität des Gutes die Oberflächentemperatur des Gutes selbst. Eine Druckmessung oder Partialdruckmessung findet nicht statt, sodass die Oberflächentemperatur nur auf Basis der Raumtemperatur innerhalb der Kühlbox bestimmt wird.

Es ist Aufgabe der Erfindung, ein Verfahren zur Bestimmung der Oberflächentemperatur eines Garguts bereitzustellen, das keine direkte Messung der Oberflächentemperatur des Garguts erfordert, sodass das Gargerät keine weiteren Sensoren benötigt.

Die Aufgabe wird gelöst durch ein Verfahren zur Bestimmung der Oberflächentemperatur eines Garguts, das in einem Gargerät mit einer Garraumatmosphäre gegart wird, die Wasserdampf enthält, wobei das Verfahren die folgenden Schritte aufweist:

> a) die Temperatur der Garraumatmosphäre und der Partialdruck des Wasserdampfs in der Gasphase der Garraumatmosphäre wird durch entsprechende Sensoren bestimmt, und
>
> b) eine Steuereinheit des Gargeräts bestimmt unter Berücksichtigung der Messwerte der Sensoren die Oberflächentemperatur des Garguts anhand der Temperatur der Garraumatmosphäre und des Partialdrucks des Wasserdampfes in der Gasphase der Garraumatmosphäre.

Durch die Erfindung ist eine direkte Messung der Oberflächentemperatur des Garguts nicht notwendig, da die Oberflächentemperatur des Garguts alleine aus der Kenntnis der Temperatur der Garraumatmosphäre und des Partialdrucks des Wasserdampfes in der Gasphase der Garraumatmosphäre gewonnen werden kann.

Die Bestimmung des Partialdrucks des Wasserdampfes in der Gasphase der Garraumatmosphäre kann indirekt durch Messung der relativen Luftfeuchtigkeit im Garraum mittels eines Feuchtesensors oder durch Messung des Sauerstoffgehalts beispielsweise mittels einer Lambdasonde erfolgen. Aus diesen Messwerten kann dann, beispielsweise in Kombination mit anderen Messwerten, wie der Temperatur der Garraumatmosphäre, auf den Partialdruck des Wasserdampfes in der Gasphase der Garraumatmosphäre geschlossen werden.

Vorzugsweise wird bei der Bestimmung der Oberflächentemperatur eine Gleichgewichtskonstante verwendet, die das Verhältnis des Wärmeeintrags in das Gargut und den Wärmeverlust des Garguts durch Verdunstung wiedergibt. Es hat sich gezeigt, dass sich das Verhältnis vom Wärmeeintrag in das Gargut zum Wärmeverlust des Garguts durch Verdunstung unabhängig von den Klimaparametern der Garraumatmosphäre auf einen konstanten Wert einstellt. Dies gilt selbstverständlich nur für Garen mit Umluft und nicht für Garen des Gargutes mit Infrarot- oder Mikrowellenstrahlung.

Mithilfe der Kenntnis des konstanten Wertes des Verhältnisses von Wärmeeintrag zu Wärmeverlust kann auch die Oberflächentemperatur des Garguts und/oder die Veränderung der Oberflächentemperatur des Garguts geschlossen werden, ohne dass diese direkt gemessen werden muss. Unter dem Begriff "Klimaparameter" werden alle Parameter verstanden, die die Garraumatmosphäre im Garraum bestimmen, wie die Temperatur des Garraumes, Partialdrücke, insbesondere der von Wasser und die Luftfeuchtigkeit.

Beispielsweise wird der Wärmeverlust des Garguts als abhängig von und insbesondere als proportional zur Differenz des Dampfdrucks an der Oberfläche des Garguts zum Partialdruck angenommen, wodurch der Wärmeverlust des Garguts einfach bestimmt werden kann.

Der Dampfdruck an der Oberfläche des Gargutes kann aus der Oberflächentemperatur, insbesondere mithilfe einer Dampfdruckkurve, bestimmt werden, sodass der Wärmeverlust des Garguts auf die Oberflächentemperatur des Garguts und den Partialdruck des Wasserdampfes in der Garraumatmosphäre zurückgeführt und einfach bestimmt werden kann.

In einer Ausführungsvariante wird zur Bestimmung der Oberflächentemperatur der $a_w$-Wert des Lebensmittels berücksichtigt, der spezifisch für die Art und/oder Menge des Garguts ist, wobei verschiedene $a_w$-Werte für verschiedene Arten und/oder Mengen von Gargut in der Steuereinheit hinterlegt sind, sodass die Bestimmung der Oberflächentemperatur durch die Berücksichtigung der lebensmittelspezifischen Eigenschaften des Garguts genauer durchgeführt werden kann. Dabei gibt der $a_w$-Wert, auch "Activity of Water" genannt, das Verhältnis des Wasserdampfdruckes eines Lebensmittels zum Dampfdruck von reinem Wasser an.

Der $a_w$-Wert kann als Koeffizient des Dampfdrucks an der Oberfläche des Gargutes zur Bestimmung des Wärmeverlustes angenommen werden, wodurch bei der Bestimmung des Dampfdruckes lebensmittelspezifische Eigenschaften des Garguts berücksichtigt werden.

In einer Ausgestaltung der Erfindung ist die Gleichgewichtskonstante unabhängig von der Drehzahl eines Lüfters des Gargeräts, sodass die Bestimmung der Oberflächentemperatur weiter vereinfacht werden kann.

Beispielsweise wurde die Gleichgewichtskonstante empirisch ermittelt und in der Steuereinheit hinterlegt, wodurch eine möglichst genaue, weil praxisnahe Gleichgewichtskonstante verwendet wird.

Vorzugsweise nimmt die Steuereinheit die Gleichgewichtskonstante als

$$\varepsilon = \frac{T_G - T_O}{a_w \cdot p(T_O) - p_G}$$

an.

Auf diese Weise kann eine Beziehung zwischen der Oberflächentemperatur des Garguts und dem Partialdruck des Wasserdampfes und der Temperatur der Garraumatmosphäre hergestellt werden mithilfe derer die Oberflächentemperatur des Garguts auf einfache Weise bestimmt werden kann.

In der Steuereinheit kann eine Wertekarte für verschiedene Werte des Partialdrucks, der Temperatur im Garraum und/oder des $a_w$-Wertes oder eine Näherungsformel für die Oberflächentemperatur des Garguts hinterlegt sein, wobei die Steuereinheit die Oberflächentemperatur. Mithilfe der Wertekarte durch Auslesen und/oder Extrapolation oder mithilfe der Näherungsformel bestimmt. Dadurch ist es möglich, die Steuereinheit kostengünstig zu realisieren, da keine komplexen Aufgaben bzw. Rechenoperationen von dieser gelöst oder ausgeführt werden müssen.

In einer Ausgestaltung der Erfindung werden zur Bestimmung des Partialdrucks und/oder des Dampfdrucks die entsprechenden Dichten herangezogen, sodass alternative Berechnungsmethoden zur Verfügung stehen.

Weitere Merkmale und Vorteile der Erfindung ergeben sich aus der nachfolgenden Beschreibung sowie aus der beigefügten Zeichnung, auf die Bezug genommen wird. In der Zeichnung zeigt:

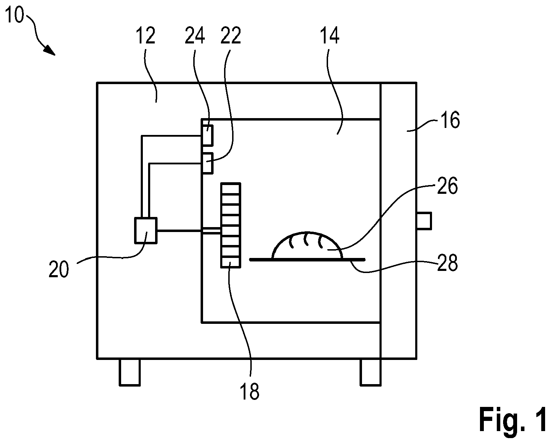

- Figur 1 ein Gargerät zur Durchführung des erfindungsgemäßen Verfahrens.

In Figur 1 ist ein Gargerät 10 im Schnitt dargestellt. Das Gargerät 10 weist ein Gehäuse 12 mit einem Garraum 14 und eine Garraumtür 16 auf.

Der Garraum 14 kann dabei von der Garraumtür 16 vollständig verschlossen werden.

Bei dem Gargerät 10 handelt es sich um ein professionelles Gargerät, wie es beispielsweise in Restaurants, Kantinen oder der Großgastronomie verwendet wird.

Das Gargerät 10 weist Garvorrichtungen auf, die aus Gründen der Übersichtlichkeit nicht dargestellt sind. Beispielsweise sind dies eine Heizvorrichtung und ein Dampferzeuger. Mithilfe dieser Garvorrichtungen lassen sich die Klimaparameter der Garraumatmosphäre steuern, und es kann eine bestimmte Garraumatmosphäre im Garraum 14 erzeugt werden.

Weiterhin ist im Garraum 14 ein Lüfter 18 vorgesehen, der in der Lage ist, einen Luftstrom im Garraum 14 zu erzeugen.

Eine Steuereinheit 20 ist ebenfalls im Gargerät 10 vorgesehen. Diese kann sowohl die Garvorrichtungen als auch den Lüfter 18 steuern.

Ferner können mit der Steuereinheit 20 verschiedene Sensoren 22, 24 verbunden sein, die Informationen über verschiedene Klimaparameter der Garraumatmosphäre an die Steuereinheit 20 übermitteln.

Beispielsweise sind dies ein Temperatursensor 22 zur Bestimmung der Temperatur $T_G$ im Garraum 14 und ein Drucksensor 24 zur Bestimmung des Partialdrucks $p_G$ des Wasserdampfs in der Gasphase im Garraum 14.

Diese Sensoren 22, 24 sind beispielsweise ebenfalls im Garraum 14 angeordnet und mit der Steuereinheit 20 verbunden.

In der in Figur 1 dargestellten Situation befindet sich im Garraum 14 ein Gargut 26, hier in Form eines Brotes, auf einem Gargutträger 28.

Dieses Gargut 26 wird nun in der Garraumatmosphäre des Garraums 14 gegart.

Dabei steuert die Steuereinheit 20 die Garvorrichtungen und den Lüfter 18 derart, dass eine optimale Garraumatmosphäre zum Garen des Gargutes 26 im Garraum 14 erzeugt wird.

Neben den Informationen, die die Steuereinheit 20 von den Sensoren 22, 24 und eventuell weiteren vorhandenen Sensoren erhält, bestimmt die Steuereinheit 20 die Oberflächentemperatur $T_O$ des Garguts 26.

Hierzu wird zunächst die Temperatur $T_G$ der Garraumatmosphäre im Garraum 14 und der Partialdruck $p_G$ des Wasserdampfes in der Gasphase der Garraumatmosphäre im Garraum 14 durch den Temperatursensor 22 bzw. den Drucksensor 24 bestimmt.

Der Drucksensor 24 kann auch zur indirekten Messung des Partialdruckes $p_G$ ausgebildet sein. Beispielsweise umfasst er dann einen Feuchtesensor, wobei die Bestimmung des Partialdruckes $p_G$ aus der vom Feuchtesensor bestimmten relativen Luftfeuchtigkeit und der durch den Temperatursensor 22 bestimmten Temperatur $T_G$ erfolgt.

Denkbar ist auch, dass der Drucksensor 24 eine Lambdasonde aufweist, wobei dann mithilfe des von der Lambdasonde gemessenen Sauerstoffgehalts der Garraumatmosphäre auf den Partialdruck $p_G$ geschlossen wird.

Die Messwerte der Sensoren 22, 24 werden an die Steuereinheit 20 übermittelt, die daraufhin die Oberflächentemperatur $T_O$ des Garguts anhand der Temperatur $T_G$ der Garraumatmosphäre und des Partialdrucks $p_G$ des Wasserdampfes in der Gasphase der Garraumatmosphäre bestimmt.

Dabei wird eine Gleichgewichtskonstante e verwendet, die das Verhältnis des Wärmeeintrags $E_{ein}$ in das Gargut 26 zum Wärmeverlust $E_{aus}$ des Garguts 26 durch Verdunstung wiedergibt.

Der Wärmeeintrag $E_{ein}$ kann in einfacher Näherung als Temperaturdifferenz der Temperatur $T_G$ der Garraumatmosphäre und der Oberflächentemperatur $T_O$, also als $T_G - T_O$ bestimmt werden.

Der Wärmeverlust $E_{aus}$ wird durch die Verdunstung von Flüssigkeit aus der Oberfläche des Garguts 26 hervorgerufen.

Der Wärmeverlust des Garguts 26 wird als abhängig von, insbesondere proportional zur Differenz des Dampfdruckes $p(T_O)$ an der Oberfläche des Garguts 26 zum Partialdruck $p_G$ angenommen, also als $p(T_O) - p_G$.

Unter Zuhilfenahme einer Dampfdruckkurve kann die Oberflächentemperatur $T_O$ aus dem Dampfdruck $p(T_O)$ an der Oberfläche des Garguts 26 bestimmt werden.

Sowohl der Wärmeeintrag $E_{ein}$ als auch der Wärmeverlust $E_{aus}$ des Garguts 26 werden gleichermaßen von Diffusionsprozessen in der Grenzschicht der Garraumatmosphäre an der Oberfläche des Garguts 26 bestimmt und daher in der gleichen Weise beeinflusst.

Dabei stellt sich die Gleichgewichtskonstante ε unabhängig von den Klimaparametern der Garraumatmosphäre im Garraum 14 auf einen bestimmten, konstanten Wert ein. Folglich kann das Verhältnis des Wärmeeintrags $E_{ein}$ zum Wärmeverlust $E_{aus}$ als konstant betrachtet werden.

Der Wert der Gleichgewichtskonstante ε ist beispielsweise empirisch ermittelt und in der Steuereinheit 20 hinterlegt.

Weiterhin ist der Wert der Gleichgewichtskonstante ε unabhängig von der Drehzahl des Lüfters 18.

Um die Genauigkeit der Bestimmung des Wärmeverlustes $E_{aus}$ zu verbessern, kann der $a_w$-Wert des Garguts 26 berücksichtigt werden. Der $a_w$-Wert ist eine Konstante, die spezifisch für die Art des Garguts 26 ist.

In der Steuereinheit 20 sind deswegen eine Vielzahl von $a_w$-Werten für verschiedene Arten von Gargütern hinterlegt.

Der $a_w$-Wert wird von der Steuereinheit 20 als Koeffizient des Dampfdruckes $p(T_O)$ an der Oberfläche zur Bestimmung des Wärmeverlustes $E_{aus}$ angenommen, also $E_{aus} = a_w \cdot P(T_O) - p_G$. Auf diese Weise wird berücksichtigt, dass die Verdunstung von Wasser aus dem Gargut 26 unterschiedlich zur Verdunstung von reinem Wasser ist. Im Regelfall liegt der $a_w$-Wert nahe 1.

Die Steuereinheit 20 nimmt folglich die Gleichgewichtskonstante ε als

$$\varepsilon = \frac{T_G - T_O}{a_w \cdot p(T_O) - p_G}$$

an. Mithilfe dieser Formel lässt sich lediglich aus den gemessenen Werten der Temperatur $T_G$ der Garraumatmosphäre und des Partialdrucks $p_G$ des Wasserdampfes die Oberflächentemperatur $T_O$ durch die Steuereinheit 20 bestimmen.

Aufgrund der Abhängigkeit des Dampfdruckes $p(T_O)$ von der Oberflächentemperatur $T_O$ ist die Gleichung der Gleichgewichtskonstanten ε nicht geschlossen nach $T_O$, also der Oberflächentemperatur, aufzulösen.

Eine näherungsweise Lösung der Gleichung der Gleichgewichtskonstanten ε ist jedoch sehr rechenintensiv, sodass in einer zweiten Ausführungsform des Verfahrens in der Steuereinheit 20 eine Näherungsformel für die Oberflächentemperatur $T_O$ hinterlegt ist, die insbesondere die oben beschriebene Formel der Gleichgewichtskonstanten ε annähert.

Ebenso wie die erste Ausführungsform der Erfindung kann die Steuereinheit 20 mithilfe der Näherungsformel aus dem vom Temperatursensor 22 ermittelten Messwert der Temperatur $T_G$ der Garraumatmosphäre und dem vom Drucksensor 24 aufgenommenen Wert des Partialdruckes $p_G$ des Wasserdampfes in der Gasphase der Garraumatmosphäre die Oberflächentemperatur $T_O$ bestimmen.

In einer dritten Ausführungsform des Verfahrens ist in der Steuereinheit 20 eine Wertekarte für die Oberflächentemperatur $T_O$ bei verschiedenen Werten des Partialdrucks $p_G$, der Temperatur $T_G$, der Garraumatmosphäre und/oder des $a_w$-Wertes hinterlegt.

Die Werte der Wertekarte sind beispielsweise durch näherungsweises Lösen der Gleichung für die Gleichgewichtskonstante ε oder empirisch ermittelt worden.

Mithilfe der Wertekarte kann die Steuereinheit 20 die Oberflächentemperatur $T_O$ bestimmen. Dies geschieht entweder durch direktes Auslesen der Oberflächentemperatur $T_O$, falls ein Wert der Oberflächentemperatur $T_O$ für die aktuelle Kombination des Partialdruckes $p_G$, der Temperatur $T_G$ und/oder des $a_w$-Wertes hinterlegt ist, oder durch Extrapolation der nächstliegenden Werte der Oberflächentemperatur $T_O$.

Weiterhin ist es für alle drei Ausführungsformen denkbar, dass anstelle des Partialdruckes $p_G$ oder des Dampfdruckes $p(T_O)$ die entsprechenden Dichten herangezogen werden.

**Patentansprüche**

1. Verfahren zur Bestimmung der Oberflächentemperatur ($T_O$) eines Garguts (26), das in einem Gargerät (10) in einer Garraumatmosphäre gegart wird, die Wasserdampf enthält, wobei das Verfahren die folgenden Schritte aufweist:

   a) Bestimmen der Temperatur ($T_G$) der Garraumatmosphäre und des Partialdrucks ($p_G$) des Wasserdampfs in der Gasphase der Garraumatmosphäre durch entsprechende Sensoren (22, 24),
   b) Bestimmen der Oberflächentemperatur ($T_O$) des Garguts (26) anhand der Temperatur ($T_G$) der Garraumatmosphäre und des Partialdrucks ($p_G$) des Wasserdampfes in der Gasphase der Garraumatmosphäre durch eine Steuereinheit (20) des Gargerätes (10) unter Berücksichtigung der Messwerte der Sensoren (22, 24).

2. Verfahren nach Anspruch 1, **dadurch gekennzeichnet, dass** bei der Bestimmung der Oberflächentemperatur ($T_O$) eine Gleichgewichtskonstante ($\varepsilon$) verwendet wird, die das Verhältnis des Wärmeeintrags ($E_{ein}$) in das Gargut (26) und den Wärmeverlust ($E_{aus}$) des Garguts (26) durch Verdunstung wiedergibt.

3. Verfahren nach Anspruch 2, **dadurch gekennzeichnet, dass** der Wärmeverlust ($E_{aus}$) des Garguts (26) als abhängig von und insbesondere als proportional zur Differenz des Dampfdruckes ($p(T_O)$) an der Oberfläche des Garguts (26) zum Partialdruck ($p_G$) angenommen wird.

4. Verfahren nach Anspruch 3, **dadurch gekennzeichnet, dass** der Dampfdruck ($p(T_O)$) an der Oberfläche des Garguts (26) aus der Oberflächentemperatur ($T_O$), insbesondere mithilfe einer Dampfdruckkurve, bestimmt wird.

5. Verfahren nach einem der vorhergehenden Ansprüche, **dadurch gekennzeichnet, dass** die Steuereinheit (20) zur Bestimmung der Oberflächentemperatur ($T_O$) den $a_w$-Wert ($a_w$) des Gargutes (26) berücksichtigt, der spezifisch für die Art des Gargutes (26) ist, wobei verschiedene $a_w$-Werte ($a_w$) für verschiedene Arten von Gargütern in der Steuereinheit (20) hinterlegt sind.

6. Verfahren nach Anspruch 5, sofern auf Anspruch 3 rückbezogen, **dadurch gekennzeichnet, dass** der $a_w$-Wert ($a_w$) als Koeffizient des Dampfdrucks ($p(T_O)$) an der Oberfläche des Gargutes (26) zur Bestimmung des Wärmeverlustes ($E_{aus}$) angenommen wird.

7. Verfahren nach einem der Ansprüche 2 bis 6, sofern auf Anspruch 2 rückbezogen, **dadurch gekennzeichnet, dass** die Gleichgewichtskonstante ($\varepsilon$) unabhängig von der Drehzahl eines Lüfters (18) des Gargerätes (10) ist.

8. Verfahren nach einem der Ansprüche 2 bis 7, sofern auf Anspruch 2 rückbezogen, **dadurch gekennzeichnet, dass** die Gleichgewichtskonstante ($\varepsilon$) empirisch ermittelt wurde und in der Steuereinheit (20) hinterlegt ist.

9. Verfahren nach Anspruch 6 oder 7, sofern auf Anspruch 6 rückbezogen, **dadurch gekennzeichnet, dass** die Steuereinheit (20) die Gleichgewichtskonstant ($\varepsilon$) als

$$\varepsilon = \frac{T_G - T_O}{a_w \cdot p(T_O) - p_G}$$

annimmt.

10. Verfahren nach einem der vorhergehenden Ansprüche, **dadurch gekennzeichnet, dass** in der Steuereinheit (20) eine Wertekarte für die Oberflächentemperatur ($T_O$) bei verschiedenen Werten des Partialdrucks ($p_G$) und/oder der Temperatur ($T_G$) der Garraumatmosphäre oder eine Näherungsformel für die Oberflächentemperatur ($T_O$) hinterlegt ist, wobei die Steuereinheit (20) die Oberflächentemperatur ($T_O$) mithilfe der Wertekarte durch Auslesen und/oder Extrapolation oder mithilfe der Näherungsformel bestimmt.

11. Verfahren nach einem der Ansprüche 5 bis 9, sofern auf Anspruch 5 rückbezogen, **dadurch gekennzeichnet, dass** in der Steuereinheit (20) eine Wertekarte für die Oberflächentemperatur ($T_O$) bei verschiedenen Werten des $a_w$-Werts ($a_w$) hinterlegt ist, wobei die Steuereinheit (20) die Oberflächentemperatur ($T_O$) mithilfe der Wertekarte durch Auslesen und/oder Extrapolation bestimmt.

12. Verfahren nach Anspruch 11, **dadurch gekennzeichnet, dass** die Wertekarte zusätzlich die Oberflächentemperatur ($T_O$) bei verschiedenen Werten des Partialdrucks ($p_G$) und/oder der Temperatur ($T_G$) der Garraumatmosphäre umfasst.

13. Verfahren nach einem der vorhergehenden Ansprüche, **dadurch gekennzeichnet, dass** zur Bestimmung des Partialdrucks ($p_G$) die entsprechende Dichte herangezogen wird.

**14.** Verfahren nach einem der Ansprüche 4 bis 13, sofern auf Anspruch 4 rückbezogen, **dadurch gekennzeichnet, dass** zur Bestimmung des Dampfdrucks $(p(T_O))$ die entsprechende Dichte herangezogen wird.

## Claims

**1.** A method of determining the surface temperature $(T_O)$ of a food (26) to be cooked, which is cooked in a cooking appliance (10) in a cooking chamber atmosphere which contains steam, the method comprising the following steps:

   a) determining the temperature $(T_G)$ of the cooking chamber atmosphere and the partial pressure $(p_G)$ of the steam in the gaseous phase of the cooking chamber atmosphere by respective sensors (22, 24),
   b) determining the surface temperature $(T_O)$ of the food (26) to be cooked, based on the temperature $(T_G)$ of the cooking chamber atmosphere and the partial pressure $(p_G)$ of the steam in the gaseous phase of the cooking chamber atmosphere by a control unit (20) of the cooking appliance (10), taking into account the measured values of the sensors (22, 24).

**2.** The method according to claim 1, **characterized in that** in determining the surface temperature $(T_O)$, an equilibrium constant $(\varepsilon)$ is used which expresses the relationship of the heat input $(E_{in})$ into the food (26) to be cooked and the heat loss $(E_{out})$, by evaporation, of the food (26) to be cooked.

**3.** The method according to claim 2, **characterized in that** the heat loss $(E_{out})$ of the food (26) to be cooked is assumed to be dependent on and, in particular, to be proportional to the difference between the steam pressure $(p(T_O))$ at the surface of the food (26) to be cooked and the partial pressure $(p_G)$.

**4.** The method according to claim 3, **characterized in that** the steam pressure $(p(T_O))$ at the surface of the food (26) to be cooked is determined from the surface temperature $(T_O)$, in particular with the aid of a steam pressure curve.

**5.** The method according to any of the preceding claims, **characterized in that** for determining the surface temperature $(T_O)$, the control unit (20) takes the $a_w$ value $(a_w)$ of the food (26) to be cooked into account, which is specific to the type of food (26) to be cooked, with different $a_w$ values $(a_w)$ being stored in the control unit (20) for different types of food to be cooked.

**6.** The method according to claim 5, if dependent on claim 3, **characterized in that** for determining the heat loss $(E_{out})$, the $a_w$ value $(a_w)$ is assumed as a coefficient of the steam pressure $(p(T_O))$ at the surface of the food (26) to be cooked.

**7.** The method according to any of claims 2 to 6, if dependent on claim 2, **characterized in that** the equilibrium constant $(\varepsilon)$ is independent of the speed of a fan (18) of the cooking appliance (10).

**8.** The method according to any of claims 2 to 7, if dependent on claim 2, **characterized in that** the equilibrium constant $(\varepsilon)$ has been empirically established and is stored in the control unit (20).

**9.** The method according to claim 6 or 7, if dependent on claim 6, **characterized in that** the control unit (20) assumes the equilibrium constant $(\varepsilon)$ to be

$$\varepsilon = \frac{T_G - T_O}{a_w \cdot p(T_O) - p_G}$$

**10.** The method according to any of the preceding claims, **characterized in that** stored in the control unit (20) is a value card for the surface temperature $(T_O)$ for different values of the partial pressure $(p_G)$ and/or of the temperature $(T_G)$ of the cooking chamber atmosphere or an approximation formula for the surface temperature $(T_O)$, the control unit (20) determining the surface temperature $(T_O)$ with the aid of the value card by read-out and/or extrapolation or with the aid of the approximation formula.

**11.** The method according to any of claims 5 to 9, if dependent on claim 5, **characterized in that** stored in the control unit (20) is a value card for the surface temperature $(T_O)$ for different values of the $a_w$ value $(a_w)$, the control unit (20) determining the surface temperature $(T_O)$ with the aid of the value card by read-out and/or extrapolation.

**12.** The method according to claim 11, **characterized in that** the value card additionally comprises the surface temperature $(T_O)$ for different values of the partial pressure $(p_G)$ and/or of the temperature $(T_G)$ of the cooking chamber atmosphere.

**13.** The method according to any of the preceding claims, **characterized in that** the associated density is made use of for determining the partial pressure $(p_G)$.

**14.** The method according to any of claims 4 to 13, if dependent on claim 4, **characterized in that** the associated density is made use of for determining the steam pressure $(p(T_O))$.

**Revendications**

1. Procédé de détermination de la température de surface ($T_O$) d'un produit à cuire (26) qui est cuit dans un appareil de cuisson (10) dans une atmosphère de chambre de cuisson contenant de la vapeur d'eau, le procédé comprenant les étapes suivantes :

   a) détermination de la température ($T_G$) de l'atmosphère de chambre de cuisson et de la pression partielle ($p_G$) de la vapeur d'eau dans la phase gazeuse de l'atmosphère de chambre de cuisson au moyen de capteurs correspondants (22, 24),

   b) détermination de la température de surface ($T_O$) du produit à cuire (26) au moyen de la température ($T_G$) de l'atmosphère de chambre de cuisson et de la pression partielle ($p_G$) de la vapeur d'eau dans la phase gazeuse de l'atmosphère de chambre de cuisson au moyen d'une unité de commande (20) de l'appareil de cuisson (10) en tenant compte des valeurs mesurées des capteurs (22, 24).

2. Procédé selon la revendication 1, **caractérisé en ce qu'**une constante d'équilibre ($\varepsilon$) exprimant le rapport de l'apport de chaleur ($E_{ein}$) dans le produit à cuire (26) et la perte de chaleur ($E_{aus}$) du produit à cuire (26) par évaporation est utilisée lors de la détermination de la température de surface ($T_O$).

3. Procédé selon la revendication 2, **caractérisé en ce que** la perte de chaleur ($E_{aus}$) du produit à cuire (26) est supposée être fonction et en particulier proportionnelle à la différence entre la pression de vapeur ($p(T_O)$) à la surface du produit à cuire (26) et la pression partielle ($p_G$).

4. Procédé selon la revendication 3, **caractérisé en ce que** la pression de vapeur ($p(T_O)$) à la surface du produit à cuire (26) est déterminée à partir de la température de surface ($T_O$), en particulier au moyen d'une courbe de pression de vapeur.

5. Procédé selon l'une des revendications précédentes, **caractérisé en ce que** l'unité de commande (20), pour la détermination de la température de surface ($T_O$), tient compte de la valeur $a_w$ ($a_w$) du produit à cuire (26), laquelle est spécifique au type du produit à cuire (26), différentes valeurs $a_w$ ($a_w$) pour différents types de produits à cuire étant mémorisées dans l'unité de commande (20).

6. Procédé selon la revendication 5, lorsqu'elle dépend de la revendication 3, **caractérisé en ce que** la valeur $a_w$ ($a_w$) est supposée être le coefficient de la pression de vapeur ($p(T_O)$) à la surface du produit à cuire (26) pour la détermination de la perte de chaleur ($E_{aus}$).

7. Procédé selon l'une des revendications 2 à 6, lorsqu'elle dépend de la revendication 2, **caractérisé en ce que** la constante d'équilibre ($\varepsilon$) est indépendante de la vitesse de rotation d'un ventilateur (18) de l'appareil de cuisson (10).

8. Procédé selon l'une des revendications 2 à 7, lorsqu'elle dépend de la revendication 2, **caractérisé en ce que** la constante d'équilibre ($\varepsilon$) a été établie de manière empirique et est mémorisée dans l'unité de commande (20).

9. Procédé selon la revendication 6 ou 7, lorsqu'elle dépend de la revendication 6, **caractérisé en ce que** l'unité de commande (20) suppose la constante d'équilibre ($\varepsilon$) comme étant

$$\varepsilon = \frac{T_G - T_O}{a_w \cdot p(T_O) - p_G}$$

10. Procédé selon l'une des revendications précédentes, **caractérisé en ce qu'**une carte de valeurs pour la température de surface ($T_O$) pour différentes valeurs de la pression partielle ($p_G$) et/ou de la température ($T_G$) de l'atmosphère de chambre de cuisson ou une formule d'approximation pour la température de surface ($T_O$) est mémorisée dans l'unité de commande (20), l'unité de commande (20) déterminant la température de surface ($T_O$) au moyen de la carte de valeurs par lecture et/ou par extrapolation ou au moyen de la formule d'approximation.

11. Procédé selon l'une des revendications 5 à 9, lorsqu'elle dépend de la revendication 5, **caractérisé en ce qu'**une carte de valeurs pour la température de surface ($T_O$) pour différentes valeurs de la valeur $a_w$ ($a_w$) est mémorisée dans l'unité de commande (20), l'unité de commande (20) déterminant la température de surface ($T_O$) au moyen de la carte de valeurs par lecture et/ou par extrapolation.

12. Procédé selon la revendication 11, **caractérisé en ce que** la carte de valeurs comprend en outre la température de surface ($T_O$) pour différentes valeurs de la pression partielle ($p_G$) et/ou de la température ($T_G$) de l'atmosphère de chambre de cuisson.

13. Procédé selon l'une des revendications précédentes, **caractérisé en ce que** la densité correspondante est utilisée pour déterminer la pression partielle ($p_G$).

14. Procédé selon l'une des revendications 4 à 13, lorsqu'elle dépend de la revendication 4, **caractérisé en ce que** la densité correspondante est utilisée

**EP 2 947 436 B1**

pour déterminer la pression de vapeur ($p(T_O)$).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008093282 A2